# EUROPÄISCHE PATENTANMELDUNG

(11) **EP 0 540 932 A1**
(43) Veröffentlichungstag der Anmeldung: **12.05.1993**
(21) Anmeldenummer: 92117883.6
(22) Anmeldetag: 20.10.1992
(51) Int. Cl.: A01N 25/18, A01N 25/34

(54) **Dispenser zur kontrollierten Freisetzung von Pheromonen**

(30) Priorität: 02.11.1991 DE 4136212
(71) Anmelder: BASF Aktiengesellschaft, D-67063 Ludwigshafen (DE)
(72) Erfinder: Neumann, Ulrich, Dr., W-6707 Schifferstadt (DE); Buschmann, Ernst, Dr., W-6700 Ludwigshafen (DE); Kiessling, Ulrich, Dr., W-6701 Erpolzheim (DE); Renz, Guenter, Dr., W-6800 Mannheim 31 (DE)

(57) **Zusammenfassung**

Dispenser zur kontrollierten Abgabe von Pheromonen, insbesondere Sexualpheromonen, dadurch gekennzeichnet, daß ein formstabiler Behälter, der aus einem für das Pheromon undurchlässigen Material besteht und als Pheromonreservoir mit einem Volumen von 0,5 bis 2,5 ml dient, mittels einer pheromondurchlässigen Folie, die für die Pheromonabgabe verantwortlich zeichnet und eine Abgabefläche von 10 cm² nicht übersteigt, verschlossen wird.

## Beschreibung

Die vorliegende Erfindung betrifft einen Dispenser zur kontrollierten Freisetzung von Pheromonen.

Pheromonen sind Botenstoffe, die innerhalb einer Art ein bestimmtes Reaktionsverhalten auslösen. Aufgrund der artspezifischen Wirkung hat man schon früh versucht, solche Stoffe im Pflanzenschutz einzusetzen. Insbesondere die Sexualpheromone standen dabei im Mittelpunkt des Interesses. Erste kommerzielle Verwendung fanden die Pheromone in Lockstoffallen zum Monitoring und zum Massenfang. Eine weitere Technik für den Einsatz von Pheromonen im Pflanzenschutz, die sogenannte Paarungsstörungs- oder "Mating disruption"-Methode, wurde in den letzten Jahren entwickelt. Es konnte in vielen Versuchen gezeigt werden, daß eine Schädlingsregulierung mit Hilfe dieser Technik durchgeführt werden kann.

Eine Voraussetzung für den erfolgreichen Einsatz von Sexualpheromonen bei der Paarungsstörung ist ein gut arbeitender Dispenser, also ein System, das den Wirkstoff über einen langen Zeitraum mit einer konstanten Abgaberate freisetzt. Viele solcher Systeme sind in der Literatur bereits beschrieben und lassen sich in zwei Kategorien einordnen:
1. Matrixsysteme
2. Reservoirsysteme
In Matrixsystemen ist der Wirkstoff in einer Matrix homogen verteilt. Die Abgaberate ist, bedingt durch diesen Aufbau, nicht linear sondern nimmt mit der Zeit ab. Reservoirsysteme haben diesen Nachteil nicht, da sich das Pheromon in einem Reservoir befindet und über Diffusion durch eine Wand mit konstanter Dicke abgegeben wird. Reservoirsysteme weisen deshalb im Gegensatz zu den Matrixsystemen eine konstantere Abgaberate auf und sind in der Abgabecharakteristik und oft auch in der Abgabedauer überlegen.

Im Stand der Technik sind drei Reservoirsysteme aufzuführen:
1. Hohlfaser-Systeme, Mikrokapseln
2. Polyethylenbehälter
3. Folienbeutel (mit und ohne Füllstoffe)
Hohlfasern (US 4 017 030) und Mikrokapseln (EP 0 141 584, US 2 800 457, US 3 577 515, JP 6 140 213) sind Systeme mit sehr kleinem Reservoir und haben deshalb sehr oft nur eine begrenzte Wirkungsdauer. Außerdem sind die Herstellkosten meist sehr hoch.

Polyethylendispenser in Röhrchen- (EP 0 243 007, EP 0 160 151, EP 0 194 934, US 4 600 146, US 4 734 281) und Ampullenform (DE 3 640 880) werden seit längerem erfolgreich im "Mating disruption"-Verfahren eingesetzt und weisen gegenüber anderen Dispensern meist eine stabile und effiziente Aufhängevorrichtung auf.

Der Nachteil der Röhrchendispenser (EP 0 160 151 u.a.) ist die Abhängigkeit der Abgaberate vom jeweiligen Füllstand. Als Folge findet man eine Abnahme der Abgabemenge mit der Zeit und damit ein nichtlineares Abgabeverhalten.

Die im DE-Patent 3 640 880 beschriebenen Pheromonampullen zeigen aufgrund ihres hohen Kunststoffanteils in der Anfangszeit nach dem Ausbringen eine erhöhte Abgaberate. Der Kunststoff nimmt während des Lagerns größere Mengen an Wirkstoff auf, die dann nach dem Ausbringen freigesetzt werden. Ein weiterer Nachteil dieser Doppel- oder Mehrkammerampullen ist, daß produktionsbedingt alle Kammern aus dem gleichen Material bestehen müssen. Zur gleichzeitigen Bekämpfung von zwei oder mehreren Schädlingen müssen die entsprechenden Pheromone in etwa der selben Zeit und mit annähernd der selben Abgaberate freigesetzt werden. Ist nun das Material auf die gewünschte Abgaberate eines Pheromons optimiert, kann das zweite Pheromon beim gleichen Material viel zu schnell oder zu langsam abgegeben werden. Über die Zugabe von Lösungsmitteln, unter Inkaufnahme von Abweichungen vom linearen Abgabeverhalten, muß dann die Abgaberate korrigiert werden.

Generell haben die Polyethylendispenser gegenüber z.B. Foliendispensern auch den Nachteil aufwendiger Produktionsverfahren und hoher Herstellkosten. Aus diesen Gründen und wegen des geringeren Kunststoffanteils werden in der vorliegenden Erfindung Folien zur Dispenserherstellung verwendet.

Folienbeutel für die Abgabe von Duft- und Wirkstoffen sind in der Literatur bereits beschrieben. Jedoch steht bei diesen Systemen meist eine sehr große Abdampfoberfläche von mehr als 30 cm² zur Verfügung. Bei Verwendung von Polyethylen- und Polypropylenfolien, die zum Verschweißen der Beutel oft unverzichtbar sind, muß deshalb die Diffusionsrate verringert werden, um eine erhöhte Abgabemenge zu vermeiden. Wie im folgenden gezeigt wird, kann dies auf unterschiedliche Weise geschehen.

Die Verwendung von Folienbeuteln zur Freisetzung von Parfümen wird bereits 1974 in dem US-Patent 3 951 622 beschrieben. Im Nachfolgepatent EP 0 194 896 wird die Anwendung auf Pheromone ausgedehnt, allerdings in Form von Lösungen in Alkoholen. Solche Lösungsmittelzusätze dienen der Verdünnung des Wirkstoffs und damit der Absenkung der Diffusionsrate. Diese Methode der Abgabekontrolle ist allerdings dann problematisch, wenn Lösungsmittel und Wirkstoff unterschiedliche Diffusionsraten aufweisen. Im Laufe der Zeit ändert sich die Zusammensetzung der Lösung und die Abgaberate ist nicht konstant.

Ebenfalls Folienbeutel werden in den Patenten DE 2 832 248, DE 2 945 655 und EP 0 019 010 beschrieben. Hier befindet sich der Wirkstoff zur Abgabeverzögerung in einer porösen bzw. pastösen Matrix, die vom Folienbeutel umschlossen wird. Dies hat den Nachteil, daß das Pheromon nicht vollständig abgegeben wird und das negative Abgabeverhalten des Matrixsystems wieder die Abgabecharakteristik des Dispensers bestimmt.

In dem Patent EP 0 342 126 wird die Verzögerung der Diffusionsrate durch Verwendung von Folienverbunden erreicht. Neben Polyethylen enthält die Folie als diffusionsverzögernde Schicht Polyvinylidenchlorid. Solche Folienverbunde bringen für die praktische Anwendung oft Probleme mit sich, da für eine reproduzierbare Abgaberate hohe Anforderungen an die Qualität der Folie gestellt werden müssen. Schwankungen in der Dicke und/oder Dichte des Verbundes, insbesondere in der oft sehr dünnen, die Diffusionsrate bestimmenden Folienschicht, führen zu starken Unterschieden im Abgabeverhalten. Da im allgemeinen die Folien nicht auf ihr Diffusionsvermögen optimiert werden sondern auf ihre Sperreigenschaften, kann es bei der Herstellung von Verbundfolien durchaus zu Schwankungen kommen, die für die Sperreigenschaften keinen Einfluß haben, aber die Diffusionseigenschaften der Folie stark verändern.

Ein Folienbeutel für die Freisetzung von Parfümen und Duftstoffen, sowie dessen Herstellung werden im Patent DE 3 149 508 beschrieben. Nicht näher spezifizierte aromadichte und aromadurchlässige Folien werden zu einem Beutel verschweißt, wobei die durchlässige Folie bis zum Gebrauch des Dispensers durch eine abziehbare, aromadichte Folie an der Duftstoffabgabe gehindert wird.

Ebenfalls zur Verhinderung der Abgabe während der Lagerzeit wird im Patent DE 3 490 012 eine Spezialfolie verwendet, die aus einer Sperr- und einer durchlässigen Schicht besteht, welche über eine Papierschicht verbunden sind. Beim Abziehen der Sperrfolie reißt die Papierschicht auseinander, so daß ein leichtes Ablösen der Folie möglich ist. Der Einsatz der nicht näher spezifizierten Behälter ist für die Abgabe von Duftstoffen vorgesehen. Probleme bestehen hinsichtlich der Papierschicht, deren Reste, die auf der durchlässigen Folie verbleiben, unvorhersehbaren Einfluß auf die Diffusion des Inhaltsstoffes und damit auf die Abgaberate nehmen können. Außerdem ist die Verwendung von Papierzwischenschichten für die erwähnte Anwendung bereits in dem Patent US 3 083 821 beschrieben. In jüngster Zeit besteht auch die Möglichkeit gezielt Siegellacke zu entwickeln, die zu peelfähigen Verbunden führen.

Für die Anwendung eines Pheromondispensers in der Praxis muß ein einfaches und leichtes Ausbringen gewährleistet sein. Zusätzlich sollte der Dispenser jedoch so zu befestigen sein, daß er auch beim Einsatz von Erntemaschinen nicht von den Ästen oder Drähten abgerissen wird. Alle bisher im Stand der Technik aufgeführten Foliendispenser können diese Forderung aus drei Gründen nicht erfüllen:
1. Eine stabile Aufhängevorrichtung mit genügender Festigkeit kann aufgrund der Labilität der Folien nicht angebracht werden. Es genügt nicht, wie bei den Beuteln in DE 3 149 508, die im übrigen für den Einsatz im Haus vorgesehen sind, ein Loch als Aufhängung einzustanzen. Um an einem Ast oder Draht befestigt werden zu können, müßte eine Schnur oder ein Draht durch das Loch geführt und um den Ast gebunden werden. Dies erfordert einen zusätzlichen und zeitaufwendigen Arbeitsgang.
2. Bei der Verwendung von automatischen Erntemaschinen sind die Dispenser teilweise großen Kräften ausgesetzt, so daß ein Aufreißen bei der Verwendung von dünnen Folien auftreten kann.
3. Folienbeutel, die meist eine große Abdampfoberfläche aufweisen, neigen dazu, sich beim Einsatz im Freiland unter starker Sonneneinstrahlung aufzublähen. Verschiedentlich wurde sogar das Aufreißen der Beutel beobachtet.

Schließlich wird im US-Patent 4 562 794 ein Dispenser zur Kontrolle von Tierschädlingen beschrieben. Auf einem stabilen Kunststoffplättchen ist eine für das Pestizid durchlässige Membran angebracht. Zwischen Membran und Plättchen befindet sich der Wirkstoff, eingebettet in eine poröse Matrix. Dies führt zu den bereits oben erwähnten Nachteilen im Abgabeverhalten. Der Dispenser wird z.B. an den Ohren von Rindern befestigt.

Zusammenfassend weisen die im Stand der Technik beschriebenen Foliensysteme für die Anwendung im Freiland keine bzw. ungenügende Aufhängevorrichtungen auf. Die Einstellung der gewünschten Abgaberate wird mit Methoden erreicht, die reproduzierbare oder konstante Abgaberaten nicht zulassen.

Die Aufgabe der vorliegenden Erfindung bestand darin einen Pheromondispenser auf Basis von Kunststoff-Folien zu entwickeln, der eine lineare Abgabecharakteristik aufweist. Die Pheromonkomponenten sollen sich mit Ausnahme von Stabilisatoren und UV-Absorbern ohne Zusätze, d.h. Lösungsmittel, poröse Festkörper etc., im Behälter befinden und über eine permeable Membran abgegeben werden. Außerdem soll der Dispenser mit einer stabilen, aber leicht handhabbaren Aufhängevorrichtung ausgestattet sein und Lagerzeiten ohne Verluste überstehen. Ein gleichzeitiger Einsatz eines Dispensers für verschiedene Schädlinge sowie die optimale Einstellung der Abgaberate für jedes eingesetztes Pheromon soll möglich sein.

Diese Aufgabenstellung wurde durch die kennzeichnenden Merkmale der Patentansprüche 1 bis 11 gelöst.

Wie oben beschrieben, sind Folienverbunde für den Einsatz in Beuteldispensern mit Vorsicht zu betrachten, da hohe Anforderungen an die Gleichmäßigkeit solcher Verbundfolien zu stellen sind. Für eine derartige Verwendung mit hohen Anforderungen an die Konstanz der Diffusionsrate für eine bestimmte Verbindung sind dementsprechend, wegen der Qualitätssicherheit in der Herstellung, am besten einschichtige, höchstens zweischichtige Standardfolien geeignet. Solche Folien auf Basis Polyethylen oder Polypropylen weisen jedoch eine hohe Pheromondurchlässigkeit auf. Dies führt bei großen Abdampfoberflächen der Beutel zu einer zu hohen Abgaberate. Um einen Zusatz zum Wirkstoff, der die Diffusionsrate senkt, zu vermeiden (s. oben), haben wir versucht, die Abgaberate über die zur Verfügung stehende Abdampffläche zu regulieren. Erstaunlicherweise hat sich gezeigt, daß dies möglich ist, ohne daß der Dispenser verklebt oder zu tropfen beginnt. Beides konnte wegen der hohen Diffusionsrate erwartet werden, wird aber bei den verwendeten Pheromonen nicht beobachtet.

Als besonders günstig hat sich erwiesen, die Behälterkammer so zu formen, daß ein groß- und ein kleinvolumiges Reservoir mit jeweils kleiner bzw. großer Abdampffläche vorhanden ist. Das kleine Reservoir wird über das große Reservoir gespeist und zeichnet wegen der großen Abdampffläche hauptsächlich für die Abgaberate verantwortlich. Der erwähnte Behälteraufbau führte in unseren Versuchen zu den konstanteren Abgaberaten. Erst wenn das große Reservoir vollständig leer ist, beginnt die Frischungsrate langsam abzufallen.

Bewerkstelligt wird die Flächenverkleinerung durch die Verwendung einer stabilen, pheromonenundurchlässigen Folie, die durch Stanzen, Tiefziehen etc. zu einem Reservoir geformt wird. Dieser Behälter wird mit dem Wirkstoff befüllt und durch eine ein- oder zweischichtige permeable Membran verschlossen. Zum Abdampfen steht somit nur die Fläche der Folie zur Verfügung, die den pheromonhaltigen Behälter abdeckt. Wie auch gefunden wird, lassen sich durch Variation der Behälterform bei gleichem Volumen unterschiedliche Flächen und damit unterschiedliche Abgaberaten einstellen. Die Abgaberate kann natürlich auch durch in Material oder Dicke unterschiedliche Oberfolien variiert werden.

Durch die Reduzierung der Abdampfoberfläche kann der Dispenser sehr kompakt gefertigt werden und bietet so beim Einsatz von Erntemaschinen, im Vergleich zu den beschriebenen Folienbeuteln, nur eine geringe Angriffsfläche. Abgesehen von der Behälteröffnung, die durch die permeable Oberfolie abgedeckt ist, besteht der Dispenser aus der stabilen Unterfolie und ist somit noch widerstandsfähiger gegen Krafteinwirkung von außen.

Wie wir früher schon gezeigt haben, ist für eine lineare Abgaberate das Verhältnis von permeabler Oberfläche zu Volumen von entscheidender Bedeutung. Bei dem vorliegenden Dispenser ist dieses Verhältnis sehr klein, und damit für eine lineare Abgaberate optimal. Dem großen Volumen des Behälters steht eine kleine Verdampfungsoberfläche gegenüber.

Die Verwendung einer stabilen, pheromonundurchlässigen Unterfolie hat noch zwei weitere Vorteile. Zum einen tritt überraschenderweise der hohe Abgabewert, der bei den Ampullendispensern zu Beginn des Aushangs beobachtet wird, bei den erfindungsgemäßen Dispensern nicht auf. Dies läßt sich darauf zurückführen, daß der Hauptteil des Dispensers aus einem Kunststoff, der für den Wirkstoff nicht zugänglich ist, besteht. Eine Anreicherung des Pheromons im Kunststoff während einer Lagerzeit, wie bei den Polyethylenröhrchen oder Polyethylenampullen ist hier nicht bzw. nur in sehr kleinem Umfang möglich.

Zum anderen hat die Folie durch ihre Steifigkeit den Vorteil, daß aus ihr Aufhängevorrichtungen gefertigt werden können, die ein leichtes Anbringen erlauben, gleichzeitig aber so fest halten, daß auch beim Einsatz von automatischen Erntemaschinen ein Abfallen und damit eventuelle Kontaminierung des Erntegutes nicht auftritt.

Für den Einsatz als Unterfolie für den entwickelten Pheromondispenser eignen sich, wie wir gefunden haben, Polyamid-, Polyester- und Polyvinylchloridfolien, sowie deren Verbundfolien. Aus mehreren Schichten aufgebaute Folien stören hier nicht, da es nur auf die Sperreigenschaften der Folie ankommt, die bei einer gewissen Schichtdicke gewährleistet werden kann. Außerdem können Verbundfolien mit Sperrschichten aus Polyvinylalkohol, Ethylvinylalkohol oder Polyvinylidenchlorid verwendet werden. Auch biologisch abbaubare Materialien, wie Stärke, Polyhydroxybuttersäure etc. und Verbundfolien davon sind einsetzbar. Die Dicke der Folien sollte dabei vorzugsweise über 200 µm gewählt werden, um für die Aufhängevorrichtung genügende Stabilität zu gewährleisten.

Zum Schutz der teilweise instabilen Pheromone gegen UV-Licht, können sowohl die Unter- als auch die Oberfolien mit Pigmenten eingefärbt werden.

Der gewählte Dispenseraufbau bringt einen weiteren Vorteil mit sich. Für die Freisetzung des Wirkstoffes ist nur die permeable Oberfolie zuständig. Will man die Freisetzung verhindern, z.B. während der Lagerung, ist es relativ einfach durch Aufbringen oder Auflegen einer pheromondichten Folie die Pheromonabgabe zu unterdrücken. Vor Gebrauch wird die Schutzfolie wieder abgezogen und der Dispenser beginnt zu arbeiten. Wird die Schutzfolie nur zum Teil über der Abgabefläche abgezogen, ergibt sich damit eine elegante Art, die zur Verfügung stehende Abdampffläche zu beeinflussen. Als Materialien können die gleichen Folien, wie für die Unterfolie beschrieben, in geringerer Dicke verwendet werden.

Die Ausführung des Dispensers mit zwei oder mehreren Kammern bringt den Vorteil mit sich, zwei oder mehrere Schädlinge gleichzeitig in nur einem Arbeitsgang behandeln zu können. Dies ist wichtig, da es immer mehr Anbauflächen gibt, in denen mehrere Schädlinge vorkommen. Auch in diesem Zusammenhang bringt, wie bereits erwähnt, der gewählte Aufbau des Dispensers Vorteile mit sich. Während bei den im Patent DE 3 640 880 beschriebenen Doppel- oder Mehrkammerampullen alle Kammern produktionsbedingt aus dem gleichen Material bestehen, kann bei der vorliegenden Erfindung durch geschickte Wahl der Dispenserform jede Kammer mit einer anderen Oberfolie abgedeckt und so die Abgaberaten der einzelnen Pheromone aufeinander abgestimmt werden. Es besteht auch die Möglichkeit, diese Regulierung über die Abgabefläche vorzunehmen, indem der Dispenser mit Kammern unterschiedlicher Größe ausgestattet wird.

Wie gefunden wurde und in den nachfolgenden Beispielen auch dokumentiert wird, zeigen die erfindungsgemäßen Dispenser eine konstante Abgaberate in einer Größenordnung, die ausreicht um mehere Monate zu überstreichen.

Ausführungsformen werden nachstehend an Hand der Zeichnungen 1 und 2 näher erläutert.

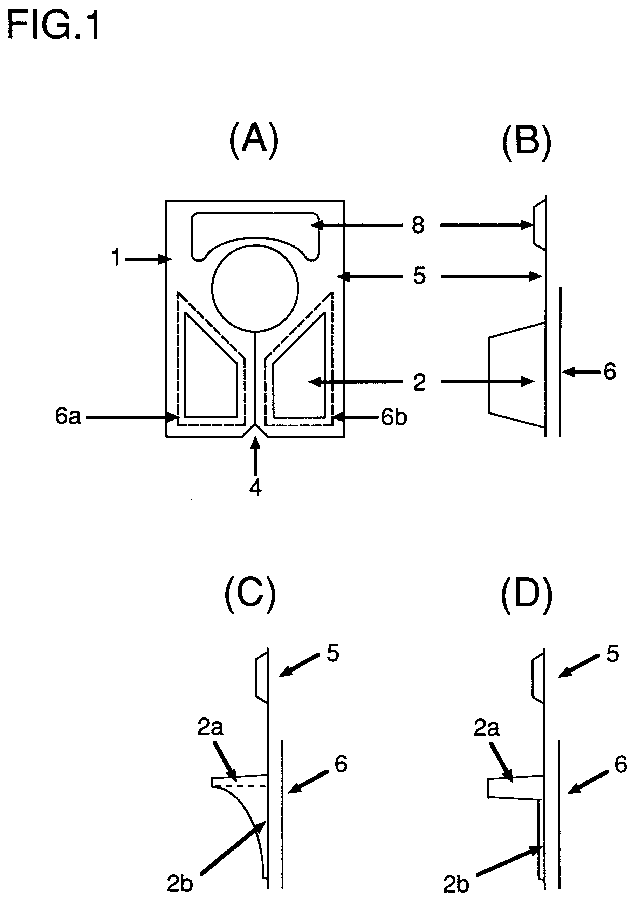

Die Figuren 1a und 1b zeigen die Vorder- bzw. Seitenansicht eines erfindungsgemäßen Pheromondispensers 1 mit beispielsweise zwei Kammern 2. Die runde Stanzung 3 im oberen Teil des Dispensers dient zur Aufnahme der Befestigungsvorrichtung (Ast, Draht etc.), die durch den Schlitz 4 eingeführt wird. Die Stabilität der Unterfolie 5 gewährleistet dabei den festen Halt des Dispensers an den Befestigungsstellen. Die Vertiefungen 8 dienen zur zusätzlichen Querstabilisierung des Aufhängebügels. Der Behälter 2, geformt aus der pheromonundurchlässigen Unterfolie 5, nimmt das Pheromon auf und wird durch die durchlässige Folie 6 verschlossen. Mit entsprechender maschineller Ausrüstung kann der Dispenser so gearbeitet werden, daß für jede Kammer eine andere Oberfolie 6a und 6b aufgebracht wird. Unterschiedliche Diffusions- und Abgaberaten zweier Pheromonen lassen sich so ausnivellieren.

Die Figuren 1c und 1d zeigen erfindungsgemäße Dispenser 1 mit beispielsweise 2 Kammern in Seitenansicht. Die Behälterform 2 ist hier so gewählt, daß ein großvolumiges Reservoir 2a mit kleiner Abdampffläche neben einem kleinvolumigen 2b mit großer Abdampffläche vorliegt. Die Form des Überganges vom großen zum kleinen Reservoir kann über eine stufe (1d) oder Kontinuierlich (1b) erfolgen.

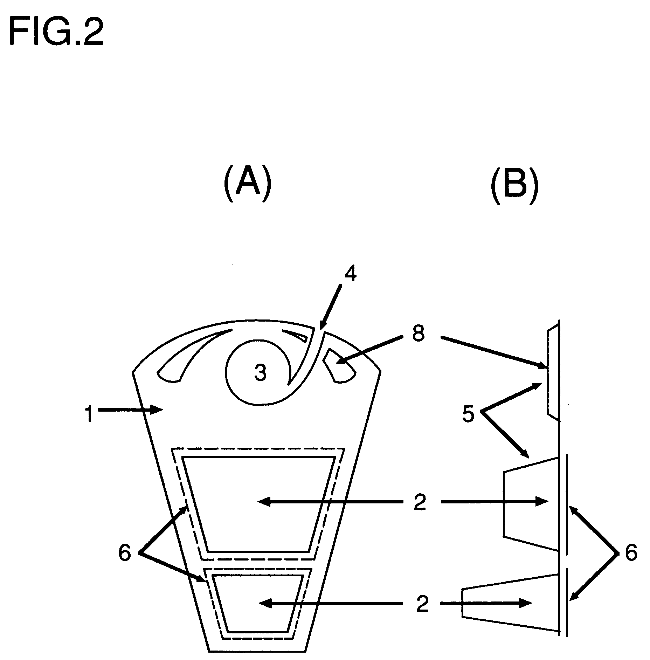

Figur 2a zeigt die Vorderansicht eines anderen erfindungsgemäßen Dispensers 1, der ebenfalls mit zwei Kammern 2 ausgerüstet ist. Die Kammern unterscheiden sich in ihrer Abgabefläche, wodurch ebenfalls zwei unterschiedlich schnell diffundierende Pheromone, unter Verwendung der gleichen Oberfolie 6, aufeinander abgestimmt werden können. Die Aufhängevorrichtung erhält ihre Stabilität wieder durch die dicke Unterfolie und ist durch Vertiefungen 8 zusätzlich stabilisiert.

Figur 2b zeigt den Dispenser in Seitenansicht. Die Kammern 2 sind zur Aufnahme des gleichen Volumens an Pheromon unterschiedlich tief ausgearbeitet.

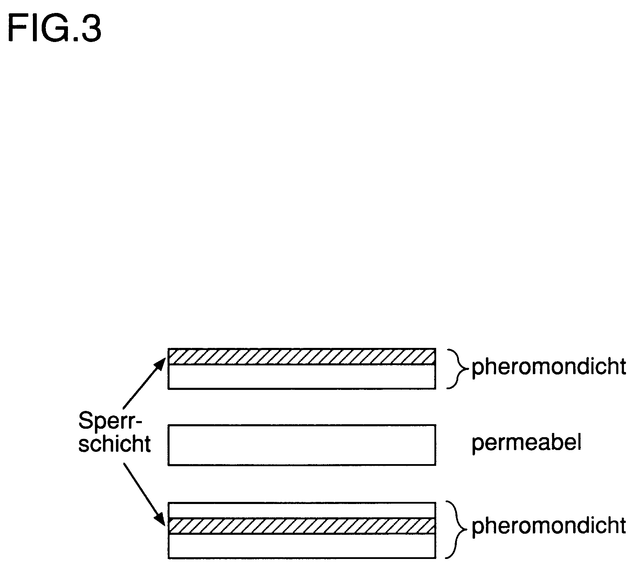

Figur 3 zeigt nochmals vergrößert den Folienaufbau eines erfindungsgemäßen Dispensers, wenn dieser mit einer Schutzfolie 9 für die Lagerung versehen ist. Die Schutzfolie 9 ist entweder nur aufgelegt oder peelfähig verschweißt (verklebt) und läßt sich vor Gebrauch abziehen.

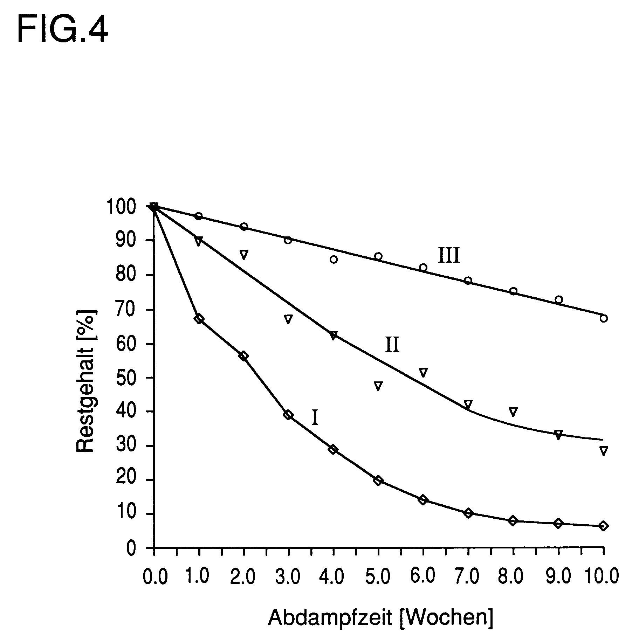

Die unterschiedlichen Abgabecharakteristika von laminiertem Matrixsystem (I), Röhrchendispenser aus Polyethylen (II) und einem erfindungsgemäßen Foliendispenser (III) sind in Figur 4 aufgezeigt. Aufgrund seines Aufbaues erhält man bei Matrixsystemen eine Abgaberate 1. Ordnung, d.h. die abgegebene Menge an Wirkstoff nimmt mit der Zeit ab. Der Röhrchendispenser als Reservoirsystem ist in dieser Hinsicht dem Matrixsystem überlegen. Allerdings, bedingt durch die große Abdampfoberfläche, die entsprechend dem Füllstand mit der Zeit abnimmt, geht die Abgaberate allmählich zurück.

Im Gegensatz dazu, weist der Foliendispenser eine sehr konstante Abgaberate, die sich auch über längere Zeit nicht ändert, auf. Erst wenn das Reservoir praktisch erschöpft ist, geht die Abgaberate zurück.

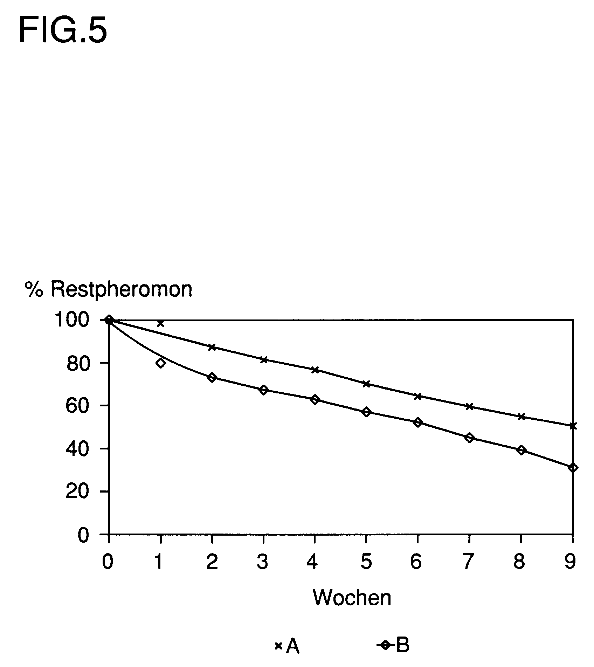

Figur 5 zeigt im Vergleich die Abdampfkurven eines erfindungsgemäßen Dispensers (A) sowie eines Polyethylenbehälters in Ampullenform (B). Die Fähigkeit des Kunststoffes Pheromon zu speichern, führt bei den Ampullendispensern, die einen hohen Kunststoffanteil aufweisen, zu den hohen Abgabewerten am Anfang der Pheromonabgabe. Der nur geringe permeable Kunststoffanteil der Foliendispenser ist dagegen der Grund, daß bei den erfindungsgemäßen Dispenser zu Beginn des Aushangs keine höheren Werte ermittelt werden. Im weiteren Verlauf der Wirkstofffreisetzung wird bei beiden Reservoirdispensern ein lineares Abgabeverhalten registriert.

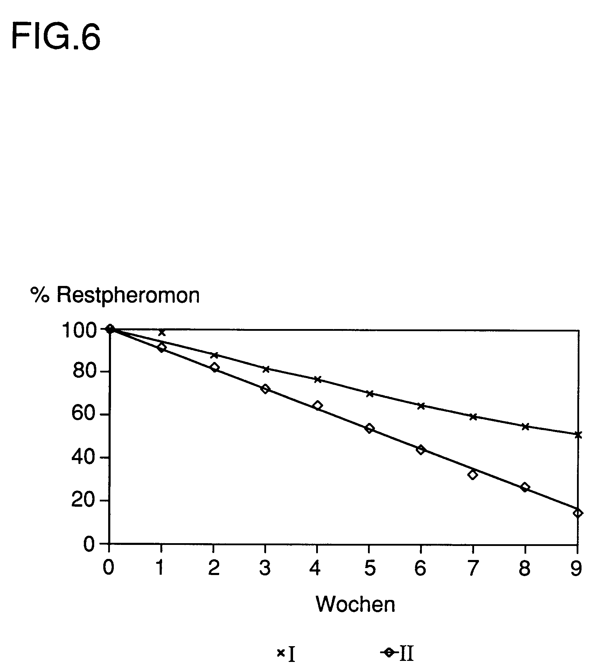

Figur 6 zeigt den Einfluß verschiedener Abdampfoberflächen auf das Abgabeverhalten. Beide Dispenser waren mit 300 mg an Z9:12Ac-Pheromon beladen, allerdings mit unterschiedlicher Abdampfoberfläche ausgestattet. Dispenser I hat eine permeable Fläche von 1,8 cm², Dispenser II von 3,1 cm². Die größere Abdampffläche führt zu der erhöhten Abgaberate des Dispensers II.

Anhand der folgenden Beispiele sei nochmals die konstante Abgaberate der erfindungsgemäßen Dispenser dokumentiert.

### Beispiel 1

Der Dispenser besteht aus einer PVC/PE-Unterfolie (250 µm) und einer permeablen Oberfolie aus Polyethylen (70 µm) und ist beladen mit 300 mg Z9:12Ac-Pheromon. Der Aushang erfolgte unter Laborbedingungen und der Wirkstoffverlust wurde wöchentlich gravimetrisch bestimmt.

| Zeit (Wochen) | Restgehalt (%) | durchschnittliche Abgaberate (mg/(d* Disp.) |
|---|---|---|
| 0 | 100 | |
| 1 | 94 | 2.5 |
| 2 | 89 | 2.3 |
| 3 | 83 | 2.3 |
| 4 | 78 | 2.5 |
| 5 | 72 | 2.4 |
| 6 | 67 | 2.3 |
| 7 | 61 | 2.6 |
| 8 | 55 | 2.4 |
| 9 | 50 | 2.3 |
| 10 | 44 | 2.4 |
| 11 | 38 | 2.5 |
| 12 | 33 | 2.4 |
| 13 | 27 | 2.4 |
| 14 | 21 | 2.5 |
| 15 | 16 | 2.2 |

### Beispiel 2:

Der Dispenser besteht aus einem Polystyrol/EVOH/PE-Folienverbund (250 µm) und einer permeablen Oberfolie aus Polyethylen (50 µm) und ist beladen mit 500 mg Z9/Z11:14Ac-Pheromon. Der Aushang erfolgte unter Laborbedingungen und der Wirkstoffverlust wurde dreiwöchentlich gravimetrisch bestimmt.

| Zeit (Wochen) | Restgehalt (%) | durchschnittliche Abgaberate (mg/(d* Disp.) |
|---|---|---|
| 0 | 100 | |
| 3 | 92 | 2.0 |
| 6 | 83 | 2.0 |
| 9 | 75 | 1.9 |
| 12 | 66 | 2.1 |
| 15 | 58 | 2.0 |
| 18 | 51 | 1.8 |

## Patentansprüche

1. Dispenser zur kontrollierten Abgabe von Pheromonen, insbesondere Sexualpheromonen, dadurch gekennzeichnet, daß ein formstabiler Behälter, der aus einem für das Pheromon undurchlässigen Material besteht und als Pheromonreservoir mit einem Volumen von 0,5 bis 2,5 ml dient, mittels einer pheromondurchlässigen Folie, die für die Pheromonabgabe verantwortlich zeichnet und eine Abgabefläche von 10 cm² nicht übersteigt, verschlossen wird.

2. Dispenser nach Anspruch 1, dadurch gekennzeichnet, daß eine Kammer des formstabilen Behälters aufgeteilt ist in ein großvolumiges Reservoir, das nur einen kleinen Teil der Abdampfoberfläche beansprucht und ein kleinvolumiges Reservoir, das den größten Teil der Abdampfoberfläche beansprucht und aus dem großen Reservoir mit Pheromon gespeist wird.

3. Dispenser nach Anspruch 1 und 2, dadurch gekennzeichnet, daß der formstabile Behälter aus einer Folie mit einer Dicke von mehr als 150 µm hergestellt wird und mit einer stabilen Aufhängevorrichtung ausgestattet ist.

4. Dispenser nach Anspruch 1 bis 3, dadurch gekennzeichnet, daß das Pheromon sich ohne Zusätze, wie Lösungsmittel oder Füllmaterialien, im Reservoir befindet.

5. Dispenser nach Anspruch 1 bis 4, dadurch gekennzeichnet, daß die pheromonundurchlässige Folie bzw. das Folienlaminat aus mindestens einer Schicht Polyester, Polyamid, Polyvinylchlorid, Polyvinylidenchlorid, Polyvinylalkohol, Polyethylvinylalkohol oder biologisch abbaubaren Polymeren, wie z.B. Stärke und polyhydroxybuttersäure, besteht.

6. Dispenser nach Anspruch 1 bis 5, dadurch gekennzeichnet, daß die pheromondurchlässige Deckfolie eine Dicke von 20 - 150 µm aufweist und aus mindestens einer Schicht Polyethylen, Polypropylen, sowie deren Copolymere mit Vinylacetat, Stärke oder Polyhydroxybuttersäure, besteht.

7. Dispenser nach Anspruch 1 bis 6, dadurch gekennzeichnet, daß der Dispenser aus zwei oder mehreren Kammern, zur gleichzeitigen Ausbringung von zwei oder mehreren Pheromonen in einem Arbeitsgang, besteht.

8. Dispenser nach Anspruch 1 bis 7, dadurch gekennzeichnet, daß die Kammern eines Dispensers zur Einstellung der Abgaberate mit unterschiedlichen Deckfolien und unterschiedlichen Abgabeflächen ausgerüstet werden können.

9. Dispenser nach Anspruch 1 bis 8, dadurch gekennzeichnet, daß eine über der permeablen Membran angebrachte Folie, die gegenüber dem Pheromon dicht ist, ein Abdampfen des Pheromons während einer Lagerzeit verhindert.

10. Dispenser nach Anspruch 1 bis 9, dadurch gekennzeichnet, daß die Schutzfolie aus den unter Anspruch 3 aufgeführten Materialien, sowie aus Aluminium bzw. Aluminiumverbunden mit Polyethlyen und Polypropylen besteht und vor Gebrauch des Dispensers ganz oder nur teilweise über dem kleinvolumigen Reservoir abgezogen werden kann.

11. Dispenser nach Anspruch 1 bis 10, dadurch gekennzeichnet, daß die Schutzfolie aufgelegt bzw. peelfähig aufgesiegelt oder aufgeklebt wird.
